Europäisches Patentamt

European Patent Office

Office européen des brevets

(11) Publication number: **0 464 952 A1**

# EUROPEAN PATENT APPLICATION

(21) Application number: **91201707.6**

(22) Date of filing: **02.07.91**

(51) Int. Cl.5: **B65B 9/02**, B65B 35/54, B65G 47/68

(30) Priority: **03.07.90 ES 9001829**

(43) Date of publication of application:
**08.01.92 Bulletin 92/02**

(84) Designated Contracting States:
**AT BE CH DE DK FR GB GR IT LI LU NL SE**

(71) Applicant: **Alba Vico, Francisco**
**Santa Ana, 63-B**
**E-08036 Cerdanyola del Valles**
**(Barcelona)(ES)**

(72) Inventor: **Alba Vico, Francisco**
**Santa Ana, 63-B**
**E-08036 Cerdanyola del Valles**
**(Barcelona)(ES)**

(74) Representative: **Smulders, Theodorus A.H.J.,**
**Ir. et al**
**Vereenigde Octrooibureaux, Nieuwe**
**Parklaan 97**
**NL-2587 BN Den Haag(NL)**

(54) **Improvements in machines designed for packaging at least two objects, particularly containers or promotional objects.**

(57) Improvements in the machines designed for packaging objects, particularly containers, comprising a bedframe (1), extending thereon a conveyor belt (2) and a pair of convergent tracks (3,21) towards some distributing means (6), at least of two containers to be joined in a package or strip, the means (6) moving them towards a third track (7) going through vertically shafted reels (8,9) feeding laminar material (10) and through the cutting and thermowelding means (13) which are shaping up the ongoing package or strip for inserting them in the heating tunnel (18) charged with the thermoretractilating process. The invention allows to continously and directly make up on the containers, any strips or packages of thermoretractable laminar material in different formats because the thermowelding means exhibit a detachable setup.

Fig. 1

EP 0 464 952 A1

The present invention relates to improvements in the machines designed for packaging objects,particularly containers.

More particularly in the present invention have been devised some improvements relative to machines designed for packaging at least two objects, particularly containers,using plastic laminar material strips,preferably from PVC,polythene or any other material thermoretractable and susceptible of being thermowelded for marketing and selling the packaged objects at least one of them for promotional purposes.

Machines for the construction of tubular strips including a welding line in the generant sense providing two equal or different cross-sectioned unit housings for the objects or containers to be packaged are already known in the prior art.

A first stage is required however by the present technique wherein the production of the disclosed strip segments with incorporating welding providing two cavities is proceeded while subsequently a second stage performed at a center quite independent from the previous stage is required,wherein is manually placed the double strip on the two objects to be packaged,going then both strip and objects to the heat tunnel for a retractilating of the strip component laminar material adapted to the object geometry. This already known technique has many disadvantages biased to make production costs still higher. The most remarkable of said disadvantages is the one derived by the packaging strip discontinued production process urging a manual step for placing the strips on the objects. Another disadvantage is the restriction to a determined strip format type to be provided with only two unit housings for every respective containers.

All these disadvantages are overcome with the improvements of the present invention relative to a machine designed for the ongoing manufacturing of strips or collars for joining and/or packaging several objects,particularly containers,these improvements allowing to perform said strip manufacturing and location at different formats and directly on the objects to be joined,without any unit limitation. These improvements comprised therefore some means for the continuous feeding of objects,these means made up with an endless conveyor belt combined with concurrent tracks towards some synchronized means designed for the selection of the packaging,components of the container units towards a third track longitudinally extending between two vertically shafted reels which feed the associated PVC sheets or suitable material,driven by conveying chains including therein the cutting and thermowelding means,these means being interchangeably to allow a format change of the packaging to be made,and all that as a function of the product configuration and number.

To make the present description more understandable, a drawing sheet illustrating an embodiment case of the present invention cited only by way of example is attached to the present description.

In the drawings:

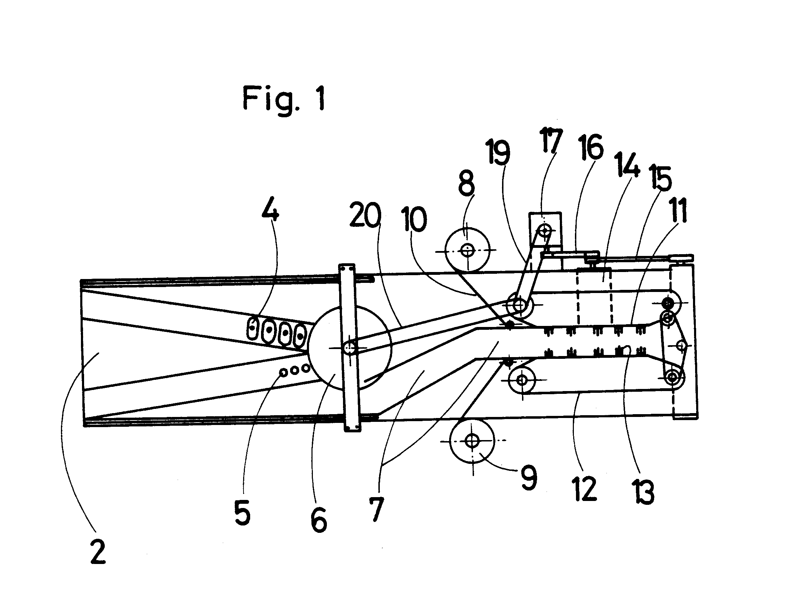

Figure 1 is a top plan view of the machine being the object of the present invention.

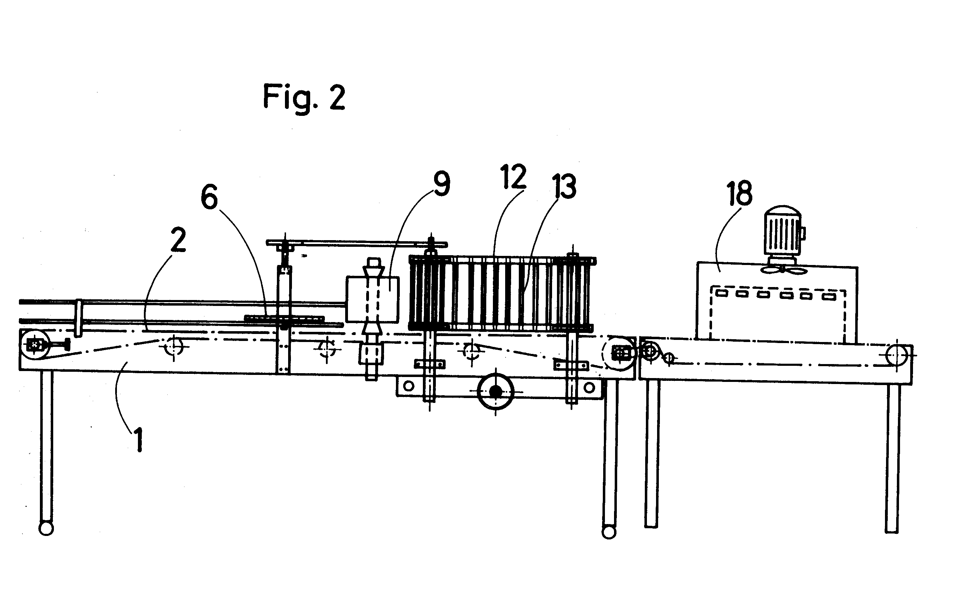

Figure 2 is a side elevation view of the machine according to the former figure.

Returning to the figures, it can be seen in the preferred embodiment some components relative to the machines designed for packaging objects,particularly containers or promotional objects of the type comprising a bedframe,designated-1-supporting the machine components such as the motor,drives and organs designed for product conveyance,selecting means of said products and the promotional wrapping or strip shaping means.

Feeding and conveying means of the different product types to be joined consist of a conveying belt -2- with tracks -3-and -21- thereon, these tracks going towards some selecting means of each product type -4- and -5- so as to setup groupings therefrom, said means comprising a vertically shafted star wheel -6- with synchronized rotation with the endless belt-2-.

The star-6- places the container groups -4--5- in a track -7- made up with two angle-shaped lengths,one extending between the reels -8- and -9- feeding the laminar material -10-.

The reels -8- and -9- are vertically shafted and the laminar material provided is driven by the conveying chain sets -11-and -12- parallel two in two and carrying the cutting and thermowelding means -13- directly making up the strip on the products -4--5- grouped in a promotional package.

Track -7- associated with the endless belt-2- is leading the products -4--5-, packaged and with the strip already performed towards the heating tunnel -18- for a retractilating of the already produced strip.

Reference numeral -14- is showing a rotor diagram; numerals -15- and -16- the driving organs for the motion of the belt-2- and the sending-back device -17- in an angle -19--20- for the driving of chains -11--12- and synchronized star -6-.

## Claims

1. Improvements in the machines designed for packaging objects,particularly containers, of the type comprising an elongated bedframe for supporting the different machine component organs,such as the driving organs and functional organs designed for the construction of the wrapping in the shape of a double tubular strip separated by welding lines, essentially characterized in that they have an endless conveying belt longitudinally to the bedframe,one of which ends is provided with convergent tracks towards the bedframe central intermediate portion and respectively containers and/or products of different configuration sliding on said tracks,these products and/or containers coinciding at the track convergent point where some selecting means are placed and synchronized with the belt forwardly feed,these means charged with the grouping at least of two containers of different type for the conveyance while rotating towards the opening of a third track consisting of two lengths,one initially oblique with the conveying belts longitudinal shaft and a second length longitudinally extending between two vertically shafted reels feeding the laminar material,such as PVC or suitable material,according to two parallel sheets respectively driven by purportedly means,these means including some second sheet cutting and thermowelding means for the directly making up of a wrapping or packaging strip around the moving container groups, the outlet of said cutting and thermowelding means being provided with a heating tunnel of the type used for the wrapping or package thermoretractilating with the purpose for adapting to the container geometry.

2. Improvements in the machines designed for packaging objects,particularly containers, according to claim 1. characterized in that te selecting means charged with the container grouping are setup by a vertically shafted star wheel.

3. Improvements in the machines designed for packaging objects,particularly containers,according to claim 1,characterized in that the driving means of the PVC or similar laminar strips,provided by the reels are setup by overlapped chain pairs,coplanar two in two,each chain pair setting up the drive motion of the associated strip and the chains extending to both sides of the containers to be packaged.

4. Improvements in the machines designed for packaging objects,particularly containers according to claim 1 and 3. characterized in that the cutting and thermowelding means are found associated to the driving chains of the laminar material strips in a detachable way,allowing this to obtain several formats of strips and wrappings as a function of the container configuration and unit number.

5. Improvements in the machines designed for packaging objects,particularly containers,according to claim 4, characterized in that said means are made up with U-shaped cross-sectioned vertical guides transversal to the driving chains and linked to the chains at the crossing points,these guides housing the detachable resistors and the associated cutting means.

Fig. 1

# Fig. 2

EP 0 464 952 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 830 036   (HARKNESS , K.A.) <br> * the whole document * <br> – – – | 1 | B 65 B 9/02 <br> B 65 B 35/54 <br> B 65 G 47/68 |
| A | US-A-4 673 078   (SWIATLOWSKI , G.J.) <br> * the whole document * <br> – – – – – | 1 | |

TECHNICAL FIELDS
SEARCHED (Int. Cl.5)

B 65 B
B 65 G
B 65 D

The present search report has been drawn up for all claims

| Place of search | Date of completion of search | Examiner |
|---|---|---|
| The Hague | 17 September 91 | NGO SI XUYEN G. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document